# EUROPEAN PATENT APPLICATION

(11) **EP 3 070 407 A1**
(43) Date of publication of application: **21.09.2016**
(21) Application number: 16159854.5
(22) Date of filing: 11.03.2016
(51) Int. Cl.: F23R 3/28, F23R 3/34, F23K 5/12, F23D 11/16, F02C 7/228, F02C 9/34

(54) **SYSTEMS AND METHODS FOR CONTROL OF COMBUSTION DYNAMICS IN COMBUSTION SYSTEM**

(30) Priority: 16.03.2015 US 201514659399
(71) Applicant: General Electric Company, Schenectady, NY 12345 (US)
(72) Inventor: DICINTIO, Richard Martin, Greenville, SC South Carolina 29615 (US); CROTHERS, Sarah Lori, Greenville, SC South Carolina 29615 (US)
(74) Representative: Lee, Brenda

(57) **Abstract**

A system 10 includes a gas turbine engine having a first combustor 13 and a second combustor 14. Each combustor has at least one fuel nozzle 16 that receives a mixture of liquid fuel 18 and water 21, via main and pilot fuel supplies, and that injects the mixture and an oxidant into a combustion chamber. A biasing system 50 is disposed in a fuel path upstream of the fuel nozzles in the second combustor to vary the ratios of water/main fuel or water/pilot fuel or the flow rates of such mixtures. The biasing system is configured to help reduce a combustion dynamics amplitude or modal coupling between the first combustor and the second combustor.

## Description

### BACKGROUND

The subject matter disclosed herein relates to gas turbine systems, and more particularly, to a system and method for controlling combustion dynamics. In particular, the system and method may be configured to reduce combustion dynamic amplitudes and/or reduce modal coupling of combustion dynamics within gas turbine systems.

Gas turbine systems generally include a gas turbine engine having a compressor section, a combustor section, and a turbine section. The combustor section may include one or more combustors (e.g., combustion cans), which receive and combust a fuel with an oxidant (e.g., air) in a combustion chamber of each combustor. As combustion occurs in each combustor, hot combustion gases flow into and drive one or more turbine stages in the turbine section. Each combustor may generate combustion dynamics, which occur when the combustor acoustic oscillations interact with the flame dynamics (also known as the oscillating component of the heat release), to result in a self-sustaining pressure oscillation in the combustor with a certain amplitude.

Combustion dynamics can occur at multiple discrete frequencies or across a range of frequencies, each with a certain amplitude. These combustion dynamics can travel both upstream and downstream relative to the respective combustor. For example, the pressure and/or acoustic waves may travel downstream into the turbine section, e.g., through one or more turbine stages, or upstream into the fuel system. Certain components of the turbine system can potentially respond to the combustion dynamics, particularly if the combustion dynamics generated by the individual combustors exhibit an in-phase and coherent relationship with each other, and have frequencies at or near the natural or resonant frequencies of the components and are at high amplitudes. As discussed herein, "coherence" may refer to the strength of the linear relationship between two dynamic signals and may be strongly influenced by the degree of frequency overlap between them. In the context of combustion dynamics, "coherence" is a measure of the modal coupling, or combustor-to-combustor acoustic interaction, exhibited by the combustion system.

Accordingly, a need exists to control the amplitude of the combustion dynamics, and/or modal coupling of the combustion dynamics, to reduce the possibility of any unwanted sympathetic vibratory response (e.g., resonant behavior) of components in the turbine system.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a gas turbine engine. The gas turbine engine includes a first combustor and a second combustor. The first combustor includes a first fuel nozzle disposed in a first head end chamber of the first combustor. The first fuel nozzle is configured to inject a first fuel mixture and an oxidant into a first combustion chamber of the first combustor. The second combustor includes a second fuel nozzle disposed in a second head end chamber of the second combustor. The second fuel nozzle is configured to inject a second fuel mixture into a second combustion chamber of the second combustor. The gas turbine engine also includes a biasing system disposed in a fuel path upstream of the first and the second fuel nozzles. The biasing system is configured to help reduce a combustion dynamics amplitude or modal coupling between the first combustor and the second combustor.

In a second embodiment, a gas turbine engine having a combustor and a biasing system is provided. The combustor includes a fuel nozzle disposed in a head end chamber of the combustor. The fuel nozzle is configured to inject a fuel mixture and an oxidant into a combustion chamber of the combustor. The biasing system is disposed in a fuel path upstream of the combustor. The biasing system is configured to at least partially control a combustion dynamics amplitude in the combustor.

In a third embodiment, a method includes injecting a first fuel mixture and an oxidant into a first combustion chamber of a first combustor using a first fuel nozzle disposed in a first head end chamber of the first combustor. The method also includes injecting a second fuel mixture and the oxidant into a second combustion chamber of a second combustor using a second fuel nozzle disposed in a second head end chamber of the second combustor. The method also includes controlling a first combustion dynamics amplitude in the first combustor with a first biasing system disposed in the first fuel path upstream of the first fuel injector. The first biasing system is configured to help reduce combustion dynamics amplitudes or modal coupling between the first combustor and the second combustor.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic of an embodiment of a gas turbine system having a plurality of combustors;
FIG. 2 is a schematic of an embodiment of the gas turbine system of FIG. 1, including a biasing system configured to route different ratios and flow rates of a liquid fuel and water mixture to each combustor of the plurality of combustors;
FIG. 3 is a schematic of an embodiment of the gas turbine system of FIG. 1, including a biasing system configured to route different ratios and flow rates of a liquid fuel and water mixture to each combustor of the plurality of combustors; and
FIG. 4 is a schematic diagram of the gas turbine system having the plurality of combustors of FIG. 1, including one or more mixing systems configured to route different flow rates and different ratios of a liquid fuel and water mixture to one or more combustors of the plurality of combustors.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The disclosed embodiments are directed toward reducing combustion dynamic amplitudes and/or modal coupling of combustion dynamics to reduce unwanted vibratory responses in downstream components in a gas turbine system by varying geometries of one or more turbine combustors, e.g., by disposing one or more biasing systems in a fuel path upstream of one or more fuel nozzles of a combustor. The biasing systems may be configured to provide a biased or non-uniform distribution of fuel (e.g., liquid fuel), water, or other diluents to one or more fuel nozzles, combustors, or a combination thereof, thereby helping to reduce combustion dynamic amplitudes and/or modal coupling of combustion dynamics.

In other words, the biasing systems may provide different flow rates, different ratios of fuel mixtures (e.g., water/fuel ratio), or a combination thereof, to different fuel nozzles or geometrical locations within each individual combustor, or from one combustor to another. In particular, in certain embodiments, the biasing system may include various flow control devices (e.g., orifice plates, valves, trim plates, or any combination thereof) disposed along the fuel path and configured to control the flow rate of the main and/or pilot fuel provide to the fuel nozzles of each combustor. Further, in certain embodiments, the biasing system may include one or more mixing systems configured to pre-mix a ratio of a liquid fuel and water mixture (e.g., a water/fuel ratio), and direct the mixture through various flow control devices, such as orifice plates and/or valves.

As used herein, an "orifice plate" may include a plate having one or more holes, or orifices, therethrough, which limit fluid flow through the orifice plate. In addition, a "valve" may include any device that is configured to control and/or limit fluid flow along a path. For example, the valve may include a ball valve, a gate valve, or any other adjustable valve, which may include a manual or powered actuator (e.g., an electric, pneumatic, or hydraulic actuator coupled to a controller). It should be noted that in various embodiments, the mixing systems may pre-mix the main and/or pilot liquid fuel and water to produce mixtures having one or more ratios, and route each mixture of the liquid fuel and water having (different) water/fuel ratios to different combustors and/or different fuel nozzles within a single combustor, thereby helping to reduce combustion dynamic amplitudes and/or modal coupling of combustion dynamics.

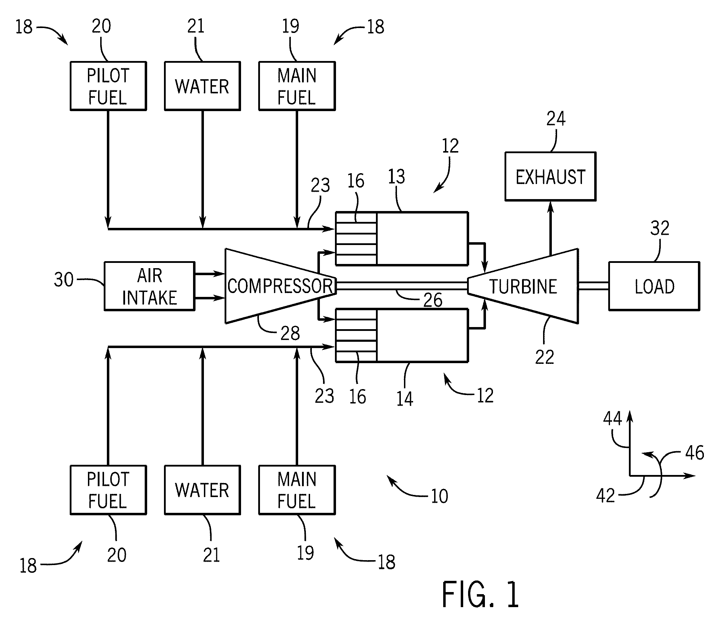

A gas turbine combustor (or combustor assembly) may generate combustion dynamics due to the combustion process, characteristics of intake fluid flows (e.g., fuel, oxidant, diluent, etc.) into the combustor, and various other factors. The combustion dynamics may be characterized as pressure fluctuations, pulsations, oscillations, and/or waves at certain frequencies and with certain amplitudes. The intake fluid flow characteristics may include velocity, pressure, fluctuations in velocity and/or pressure, variations in flow paths (e.g., turns, shapes, interruptions, etc.), or any combination thereof. Collectively, the combustion dynamics can potentially cause vibratory responses and/or resonant behavior in various components downstream from the combustor. For example, the combustion dynamics (e.g., at certain frequencies, ranges of frequencies, amplitudes, etc.) can travel downstream in the gas turbine system. If the downstream components have natural or resonant frequencies that are driven by these pressure fluctuations (e.g., combustion dynamics), then the pressure fluctuations can potentially cause vibration, stress, fatigue, etc. The components may include turbine nozzles, turbine blades, turbine shrouds, turbine wheels, bearings, or any combination thereof. The downstream components are of specific interest, as they are more sensitive to combustion tones that are in-phase, coherent, and of high amplitude. Thus, the disclosed embodiments are configured to help reduce the amplitude and/or coherence of combustion dynamics. As further described below with respect to FIGS. 1-4, the disclosed embodiments may reduce the ability of the combustion dynamics to cause a vibratory response in downstream components.

With the foregoing in mind, FIG. 1 is a schematic of an embodiment of a gas turbine system 10 having a plurality of combustors 12. In the illustrated embodiment, a first combustor 13 and a second combustor 14 are depicted. However, it should be noted that in other embodiments, any number of combustors 12 (e.g., 1, 3, 4, 5, 6, 7, 8, 9, 10 or more) may be provided in the turbine system 10. The turbine system 10 may use liquid or gaseous fuel, such as natural gas and/or a synthetic gas, to drive the turbine system 10.

In the illustrated embodiment, one or more fuel nozzles 16 (e.g., primary fuel nozzles) intake a supply of liquid fuel 18 (or liquid fuel supply). Examples of the liquid fuel 18 include, but are not limited to, hydrocarbon based liquid fuels, such as diesel fuel, jet fuel, gasoline, naphtha, fuel oil, liquefied petroleum gas, and so forth. Specifically, the liquid fuel 18 provided to the one or more fuel nozzles 16 may include a main fuel 19 routed to a main fuel nozzle portion of the fuel nozzles 16 and/or a pilot fuel 20 routed to a pilot fuel nozzle portion of the fuel nozzles 16. In addition, the fuel nozzles 16 may intake a supply of water 21 (or water supply), e.g., when the turbine system 10 uses the liquid fuel 18. Examples of the water 21 include, but are not limited to, boiler feedwater, deaerated water, steam condensate, demineralized water, and so forth. In certain embodiments, the water 21 may include liquid water, steam, or a combination thereof. The water 21 may be readily available elsewhere in the plant or facility having the system 10.

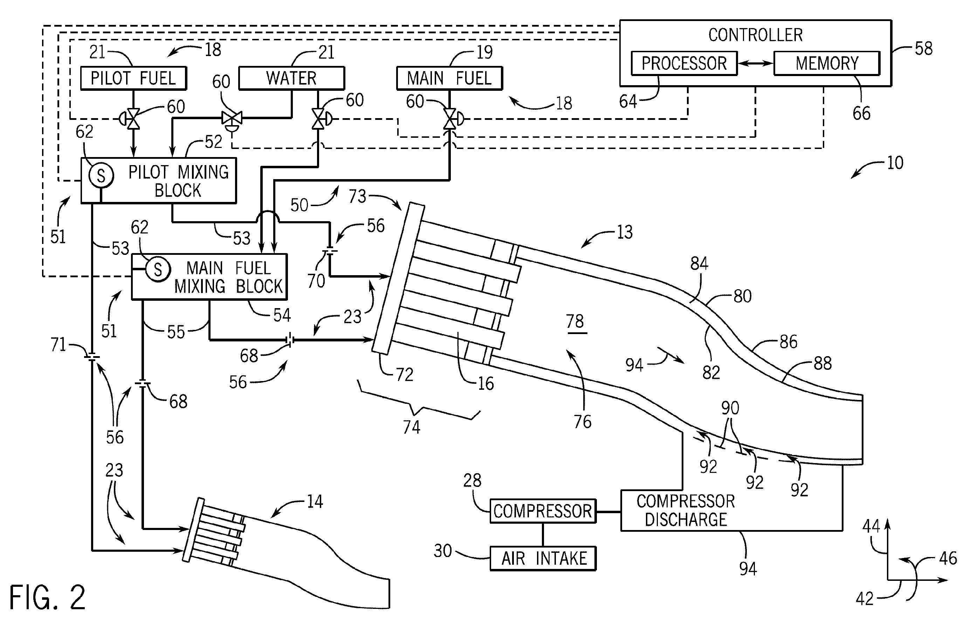

As described in detail with respect to FIGS. 2-4, the disclosed turbine system 10 may route the liquid fuel 18 and the water 21 along a fuel path 23 upstream of the fuel nozzles 16. In certain embodiments, the liquid fuel 18 may be routed as separate flows of the main fuel 19 and the pilot fuel 20. Mixing the liquid fuel 18 with the water 21 may improve the efficiency of byproduct (e.g., NOₓ, SOₓ, CO, or particulate matter) suppression, thereby reducing production and exhaust of the byproducts from the system 10. The fuel nozzles 16 then further mix the fuel, or the fuel-water mixture, with oxidant (e.g., air), and distribute the fuel, water (when used), and oxidant mixture into the plurality of combustors 12, which may be arranged circumferentially within the system 10.

The mixture of the liquid fuel 18 (e.g., the main fuel 19 or the pilot fuel 20), the water 21 (when used), and oxidant (e.g., air) combusts in a chamber within each of the combustors 12, thereby creating hot pressurized exhaust gases. The combustors 12 direct the exhaust gases through a turbine 22 toward an exhaust outlet 24. As the exhaust gases pass through the turbine 22, the gases force turbine blades to rotate a shaft 26 along an axis of the turbine system 10. As illustrated, the shaft 26 is connected to various components of the turbine system 10, including a compressor 28. The compressor 28 also includes blades coupled to the shaft 26. As the shaft 26 rotates, the blades within the compressor 28 also rotate, thereby compressing air from an air intake 30 through the compressor 28 and into the fuel nozzles 16 and/or combustors 12. The shaft 26 may also be connected to a load 32, which may be a vehicle or a stationary load, such as an electrical generator in a power plant or a propeller on an aircraft, for example. The load 32 may include any suitable device capable of being powered by the rotational output of turbine system 10.

As discussed in detail below, certain embodiments of the turbine system 10 are configured to route different ratios and/or flow rates of a fuel mixture, such as a mixture of the water 21 and the liquid fuel 18, to one or more combustors 12, thereby helping to reduce the amplitude and coherence of combustion dynamics. In the following discussion, reference may be made to an axial direction or axis 42 (e.g., a longitudinal axis) of the combustor 12, a radial direction or axis 44 of the combustor 12, and a circumferential direction or axis 46 of the combustor 12.

FIG. 2 is a schematic of an embodiment of the gas turbine system 10 of FIG. 1, including a biasing system 50 disposed along one or more fuel paths 23 upstream of one or more combustors 12. Specifically, in certain embodiments, the biasing system 50 is configured to route different ratios and/or flow rates of a fuel mixture, such as a mixture of the water 21 and the liquid fuel 18 (e.g., the pilot fuel 20, the main fuel 19), to one or more combustors 12, thereby helping to reduce the amplitude and coherence of combustion dynamics.

For example, in certain embodiments, the biasing system 50 may include one or more mixing blocks 51 disposed along the fuel path 23 and configured to mix a fuel mixture having a particular ratio of the liquid fuel 18 to the water 21 (e.g., water/fuel ratio). Each mixing block 51 may be configured to route the fuel mixture to the fuel nozzles 16 of one or more combustors 12. In certain embodiments, one or more mixing blocks 51 may be dedicated to each fuel nozzle 16, a subgroup of fuel nozzles 16, a combustor 12, or a subgroup of combustors 12. In certain embodiments, the mixing systems 51 may be configured to adjust the ratio of the fuel mixture provided to each combustor 12 and/or provided to each fuel circuit within a particular combustor 12, as further described in detail below. Further, in certain embodiments, the biasing system 50 may include one or more flow control devices 56 configured to control or bias a flow (e.g., create a non-uniform distribution of the flow) of the fuel mixture along the fuel path 23 to the one or more combustors 12. For example, in certain embodiments, the flow control devices 56 may have various geometrical configurations and/or placements along the fuel path 23, and may be configured to adjust or regulate a flow rate of the fuel mixture provided to each combustor 12 and/or provided to each fuel circuit within a particular combustor 12, as further described below.

In particular, it should be noted that the biasing system 50 may vary the quantity (e.g., flow rate) and/or composition (e.g., ratio of the liquid fuel 18 to the water 21) of the fuel mixture provided to one or more combustors 12 and/or provided to one or more circuits within a particular combustor 12 to reduce amplitudes and/or coherence of combustion dynamics, thereby reducing the possibility of unwanted vibrations in downstream components. For example, varying the flow rates and/or composition of the fuel mixture routed to different fuel nozzles 16 of a single combustor 12 may result in differences in the fuel nozzle pressure ratio and/or equivalence ratio between the fuel nozzles 16 of the combustor 12, thereby directly affecting the combustion instability frequency and/or amplitude within the combustor. As the frequency of the combustion dynamics in the one or more fuel nozzles 16 is driven away from that of the other fuel nozzles 16 within the combustor 12, coherence and, therefore, modal coupling of the combustion dynamics are reduced. As a result, the disclosed embodiments may reduce the ability of the combustor amplitudes to cause a vibratory response in downstream components.

Likewise, varying the flow rates and/or composition of the fuel mixture routed between the fuel nozzles 16 of two or more combustors 12 may vary the combustion dynamics from combustor-to-combustor in a manner to reduce the combustion dynamics amplitudes and/or modal coupling of the combustion dynamics among the plurality of gas turbine combustors 12. For example, varying the flow rates and/or composition of the fuel mixture routed to fuel nozzles 16 of different combustors 12 may result in combustor-to-combustor variations (e.g., variations in combustion dynamics frequencies from combustor to combustor), thereby reducing the possibility of modal coupling of the combustors 12, and thus reducing amplitudes that travel downstream into the turbine section 22 particularly at frequencies that are aligned with resonant frequencies of the components of the gas turbine system 10. The frequencies may be shifted from combustor-to-combustor, disrupting modal coupling. Accordingly, the disclosed embodiments may reduce the similarity of frequencies between one or more combustors 12, thereby reducing coherence amplitudes within the system 10.

With the foregoing in mind, in the illustrated embodiment, the biasing system 50 is configured to vary the flow rates and/or the composition of the fuel mixture routed to the fuel nozzles 16 of the first combustor 13 from the flow rates and/or the composition of the fuel mixture routed to the fuel nozzles of the second combustor 14. Specifically, in the illustrated embodiment, the biasing system 50 includes a pilot mixing block 52 and a main fuel mixing block 54. The pilot mixing block 52 may be configured to pre-mix the pilot fuel 20 with the water 21, and route the pilot fuel mixture 53 to the pilot fuel nozzle portion of the fuel nozzles 16 within one or more combustors 12. Likewise, the main fuel mixing block 54 may be configured to pre-mix the main fuel 19 with the water 21, and route the main fuel mixture 55 to the main fuel nozzle portion of the fuel nozzles 16 within one or more combustors 12.

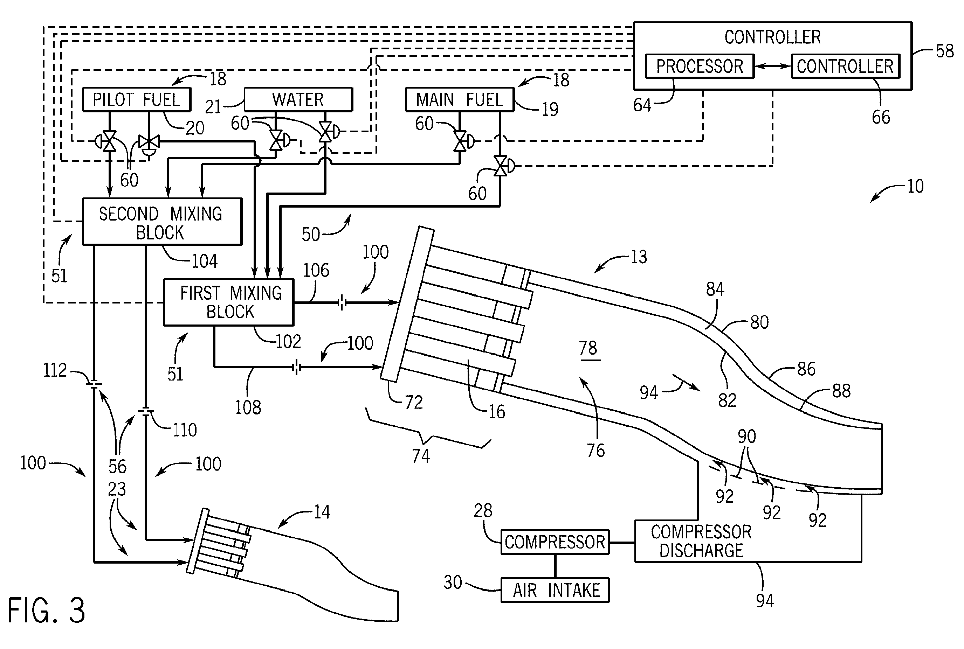

The pilot fuel mixture 53 may be used during a startup process or mode of the combustor 12. After startup (e.g., during a steady state process or mode), the main fuel mixture 55 may be utilized to supply the normal, or regular, flow rate of the fuel mixture to the combustor 12. The pilot fuel mixture 53 may also be used together with the main fuel mixture 55, as further described in detail with respect to FIG. 3. The pilot mixing block 52 may be configured to mix one or more ratios of the pilot fuel mixture 53 (e.g., water/fuel ratio), and may route different ratios of the pilot fuel mixture 53 to one or more combustors 12. Similarly, the main fuel mixing block 54 may be configured to mix one or more ratios of the main fuel mixture 53 (e.g., water/fuel ratio), and may route the main fuel mixture 55 to the one or more combustors 12.

In certain embodiments, a controller 58 (e.g., an electronic controller) may be configured to control and/or regulate the mixing blocks 51 with one or more controls signals configured to open or close one or more flow valves 60. For example, the controller 58 may regulate the flow valves 60 to control and/or limit the flow of the pilot fuel 20, the main fuel 19, and/or the water 21 into each of the mixing blocks 51, thereby controlling a ratio of the fuel mixture (e.g., a ratio of the liquid fuel 18 and the water 21). Further, the controller 58 may be configured to regulate and/or monitor each mixing block 51 via sensor feedback from one or more sensors 62 disposed within the mixing blocks 51, the fuel nozzles 16, the combustors 12, the turbine section 22, or any combination thereof. For example, the sensors 62 may include any type of pressure sensors, temperature sensors, flow rate sensors, composition sensors, vibration sensors, acoustics sensors, flame sensors, or a combination thereof. In certain embodiments, the controller 58 may adjust a ratio of the liquid fuel 18 relative to the water 21 based on the sensor feedback received from the sensors 62. In certain embodiments, the controller 58 may additionally be configured to regulate and/or monitor the system 10, and may provide a particular ratio (e.g., water/fuel ratio) of the fuel mixture (e.g., pilot fuel mixture 53 and/or the main fuel mixture 55) to a particular combustor 12, a particular fuel nozzle 16, a particular group of combustors 12, and/or a particular group (e.g., circuit) of fuel nozzles 16 within the system 10.

In certain embodiments, the controller 58 may include various components to control the ratios of the fuel mixture (e.g., water/fuel ratio) provided to the fuel nozzles 16 and combustors 12 of the system 10. For example, the controller 58 may include a processor 64 and a memory 66. Further, in certain embodiments, the controller 58 may include a hardware interface for interacting with the sensors 62, the flow valves 60, the mixing systems 51, and/or various other components of the system 10. As depicted, the processor 64 and/or other data processing circuitry may be operably coupled to memory 66 to retrieve and execute instructions for monitoring and controlling the system 10. For example, these instructions may be encoded in programs or software that are stored in memory 66, which may be an example of a tangible, non-transitory computer-readable medium, and may be accessed and executed by the processor 64 to allow for the presently disclosed techniques to be performed. The memory 66 may be a mass storage device, a FLASH memory device, removable memory, or any other non-transitory computer-readable medium. Additionally and/or alternatively, the instructions may be stored in an additional suitable article of manufacture that includes at least one tangible, non-transitory computer-readable medium that at least collectively stores these instructions or routines in a manner similar to the memory 66 as described above.

Further, in the illustrated embodiment, the biasing system 50 includes one or more flow control devices 56 disposed along the fuel path 23, such as along the fuel paths configured to route the pilot fuel mixture 53 and/or the main fuel mixture 55 from the mixing blocks (e.g., the pilot mixing block 52 and/or the main fuel mixing block 54) to each of the one or more combustors 12. In certain embodiments, the flow control devices 56 may include orifice plates, valves, trim plates, or any other device configured to regulate or bias the flow (e.g., create a non-uniform distribution of the flow) of the fuel mixture along the fuel path 23. For example, in the illustrated embodiment, one or more orifice plates 68 may be disposed along the fuel path 23 to bias the flow (e.g., create a non-uniform distribution of the flow) of the pilot fuel mixture 53 and/or the main fuel mixture 55 from the mixing blocks 51 to the first combustor 13 and the second combustor 14. In particular, the configuration and/or geometry of the orifice plates 68 may be altered to adjust the flow of the fuel mixture along the fuel path 23.

For example, in the illustrated embodiment, a first orifice plate 70 disposed along the fuel path 23 from the pilot mixing block 52 to the first combustor 13 may be different in configuration and/or geometry from a second orifice plate 71 disposed along the fuel path 23 from the pilot mixing block 52 to the second combustor 14. Varying the configuration and/or geometry of the orifice plates 70, 71 may adjust or alter the flow of the fuel mixture (e.g., a ratio of liquid fuel 18 relative to water 21) along the fuel path 23, thereby ultimately altering the amplitudes and frequencies of the combustion dynamics generated by a given combustor 12 in the manner described above. Although the orifice plates 68 positioned in the fuel lines 23 between the main fuel mixing block 54 and the combustors 13, 14 are designated with the same reference number, it should be understood that these orifice plates 68 may be different in configuration and/or geometry from each other.

It should be noted that any number of orifice plates 68 (e.g., 1, 2, 3, 4, 5, 6, 7, 8, 9, 10, or more) may be disposed along the fuel path 23 from the biasing system 50 and the one or more combustors 12. Further, it should be noted that in certain embodiments, any number of orifice plates 68 may be disposed in the fuel path 23 routing a fuel mixture from the biasing system 50 to individual fuel nozzles 16 and/or groups of fuel nozzles 16 within a single combustor. In this manner, the orifice plates 68 may be utilized to bias the flow (e.g., create a non-uniform distribution of the flow) of the fuel mixture provided to a particular fuel nozzle 16 and/or a particular group (e.g., circuit) of fuel nozzles 16 within a single combustor 12.

In certain embodiments, the configurations and/or geometries of the flow control devices 56 (e.g., orifice plates 68) may be altered to provide a desired flow (e.g., a non-uniform distribution of the flow) of the fuel mixture from the biasing system 50 to each combustor 12, each fuel nozzle 16, one or more groups of combustors 12, and/or one or more groups (e.g., circuit) of fuel nozzles 16. For example, the disclosed embodiments may vary the geometric shape (e.g., angled, curved, stepped, concave, convex, or flat), the geometric characteristics (e.g., height, width, depth, length, degree of angle, angle characteristics, radius of curvature, distance between orifices), the geometric arrangements (e.g., regular, irregular, etc.), configuration (e.g., serial, parallel, random, etc.) or any combination thereof, of the orifice plates 68 along the fuel paths 23.

Each orifice plate 68 may include one or more holes, or orifices, which limit the fluid flow along the flow path 23 in which the orifice plate 68 is installed. For example, the orifice plate 68 may be configured to control or limit the flow of the pilot fuel mixture 53 and/or the main fuel mixture 55 along the fuel path 23 upstream of the fuel nozzles 16. For example, the first orifice plate 70 may be configured to lower the flow rate of the pilot fuel mixture 53 provided to the first combustor 13 when compared to the flow rate of the pilot fuel mixture 53 routed through the second orifice plate 71 and to the second combustor 14. In certain embodiments, the orifice plates 68 may be configured to lower flow rates between approximately 5 percent to 50 percent, 10 percent to 35 percent, or 15 percent to 25 percent of a normal, or regular, flow rate of the fuel mixture along the fuel path 23.

In certain embodiments, the holes in each orifice plate 68 collectively define an effective orifice area through the orifice plate 68 that determines the mass flow of fluid through the orifice plate 68 for a given differential pressure across the orifice plate 68. The effective orifice area of the orifice plate 68 is the combined area through which the fuel mixture passes and may be calculated as the total cross-sectional area of the holes in the orifice plate 68 multiplied by a coefficient of flow or discharge coefficient. The coefficient of flow may represent a ratio of the actual and theoretical maximum flows through the orifice plate 68. Furthermore, the orifice plates 68 may have variations in the number, arrangement, diameter, shapes, total effective area, total effective orifice areas, or any combination thereof, of the orifice(s) disposed on the orifice plate 68.

In certain embodiments, the flow control devices 56 may be selectively disposed along (or selectively excluded from) the fuel path 23 for a particular combustor 12, a particular fuel nozzle 16, a particular group of combustors 12, and/or a particular group of fuel nozzles 16 to provide the variation from other combustors 12 and/or fuel nozzles 16 having the flow control device 56 disposed along the fuel path 23. Indeed, a subset or group may include one or more combustors 12, and there may be any number of groups or subsets of combustors 12 (e.g., 2, 3, 4, 5, 6, or more) up to the number of combustors 12 included in the gas turbine system 10. It certain embodiments, a group of combustors 12 may be provided substantially similar compositions and/or flow rates of the fuel mixture via the biasing system 50, while other combustors 12 and/or another group of combustors 12 may operate independent of the biasing system 50. Accordingly, the combustors 12 may be modified in groups of one or more combustors 12. Multiple groups of combustors 12, each producing its own combustion frequency, may be employed, with any desired spatial arrangement of the combustors 12 in a group (e.g., adjacent or alternating). It should be noted that while certain examples or example embodiments are described in view of variations between combustors 12, the same examples or example embodiments may be applicable to variations between fuel nozzles 16 of the same and/or different combustors 12.

In certain embodiments, the biasing system 50 may utilize both the mixing systems 51 and the flow control devices 68 in various combinations and configurations to vary the flow rates and/or the composition of the fuel mixture (e.g., liquid fuel 18 and the water 21) routed to the one or more combustors 12. Furthermore, the controller 58 may be configured to provide additional dynamic variation during the operation of the system 10. For example, in certain embodiments, the controller 58 may vary the ratio of the main fuel mixture 55 (e.g., a ratio of the main fuel 19 relative to the water 21) provided to the first combustor 13 from the ratio of the main fuel mixture 55 provided to the second combustor 14 during the operation of the system 10 via feedback from the sensors 62 and control of the flow valves 60. As a further example, in certain embodiments, the controller 58 may vary the ratio of the pilot fuel mixture 53 (e.g., a ratio of the pilot fuel 20 relative to the water 21) provided to one or more fuel nozzles 16 of the first combustor 13 from the ratio of the pilot fuel mixture 53 provided to other fuel nozzles 15 of the first combustor 13 during the operation of the system 10 via feedback from the sensors 62 and control of the flow valves 60. It should be noted that in certain embodiments, the same ratio of the fuel mixture may be provided to all the fuel nozzles 16 in the combustor 12, with flow variations between the fuel nozzles 16 being provided by the flow control devices 56 disposed along the fuel path 23. Each of these embodiments will help to reduce any unwanted vibratory response of gas turbine components.

In the illustrated embodiment, each combustor 12 includes a head end 73, an end cover 72, a combustor cap assembly 74, and the combustion chamber 76. The head end 73 of the combustor 12 generally encloses the cap assembly 74 and fuel nozzles 16 in a head end chamber positioned axially 42 between the end cover 72 and the combustion chamber 76. The combustor cap assembly 74 generally contains the fuel nozzles 16. The fuel nozzles 16 may route the fuel mixture (e.g., the pilot fuel mixture 53 and/or the main fuel mixture 55), the oxidant, and sometimes other fluids to the combustion chamber 76. The combustor 12 has one or more walls extending circumferentially 46 around the combustion chamber 76 and the longitudinal axis of the combustor 12, and generally represents one of a plurality of combustors 12 that are disposed in a spaced arrangement circumferentially about a rotational axis (e.g., shaft 26) of the gas turbine system 10.

As noted above, in the illustrated embodiment, the biasing system 50 is configured to vary the flow rates and/or the composition of the fuel mixture routed to the fuel nozzles 16 of the first combustor 13 from the flow rates and/or the composition of the fuel mixture routed to the fuel nozzles 16 of the second combustor 14. Further, as noted above, various configurations of the mixing systems 51 and/or flow control devices 56 may be utilized to achieve these variations. Specifically, the variations in the ratios of the fuel mixtures caused by the mixing systems 51 help to vary the amount and/or the ratio of the liquid fuel 18 relative to water 21 routed to a particular combustor 12, thereby varying the combustion dynamics in the plurality of combustors 12, such that the combustion dynamics frequency, and possibly amplitude, of one or more combustors 12 is different from at least one other combustor 12 or group of combustors 12 within the gas turbine system 10. Further, the flow control devices 56 may be controlled to vary the ratio of the liquid fuel 18 relative to water 21 routed to each combustor 12, thereby varying the combustion dynamics in the plurality of combustors 12, such that the combustion dynamics frequency, and possibly amplitude, of one or more combustors 12 is different from at least one other combustor 12 or group of combustors 12 within the gas turbine system 10. In this manner, the biasing system 50 helps to reduce unwanted vibratory responses in the gas turbine system 10, and therefore, minimizes vibrational stress, wear, and/or performance degradation of the gas turbine system 10.

In the illustrated embodiment, one or more fuel nozzles 16 are attached to the end cover 72 and pass through the combustor cap assembly 74 to the combustion chamber 76. For example, the combustor cap assembly 54 contains one or more fuel nozzles 16 (e.g., 1, 2, 3, 4, 5, 6, or more) and may provide support for each fuel nozzle 16. The combustor cap assembly 74 is disposed along a portion of the length of the fuel nozzles 16, housing the fuel nozzles 16 within the combustor 12. Each fuel nozzle 16 facilitates the mixing of pressurized oxidant and the fuel mixture and directs the mixture through the combustor cap assembly 74 into the combustion chamber 76. The oxidant-fuel mixture may then combust in a primary combustion zone 78 of the chamber 76, thereby creating hot pressurized exhaust gases. These pressurized exhaust gases drive the rotation of blades within the turbine 22.

In certain embodiments, the biasing system 50 may be configured to vary the ratios and/or the flow rates of the fuel mixture (e.g., a ratio of the liquid fuel 18 relative to the water 21) between the fuel nozzles 16 of the combustor 12, thereby varying the frequency, and possibly the amplitude, of the combustion dynamics of at least one fuel nozzle 12 with respect to another. For example, the biasing system 50 may be configured to vary the fuel mixture along the fuel path 23 to each fuel nozzle 16, such that a desired fuel nozzle(s) 16 may be modified in a manner to tune the desired fuel nozzle(s) 12 to operate at a certain frequency or within a certain frequency range. In this way, one or more fuel nozzles 16 can be tuned to operate at a different frequency when compared to one or more of the remaining fuel nozzles 16, while maintaining a similar fuel flow to each combustor 12. Such an arrangement reduces modal coupling of the fuel nozzles, and therefore combustion dynamic amplitudes are reduced along with any undesirable vibratory responses in downstream components. In certain embodiments, the combustors 12 may be modified in groups of one or more combustors 12.

Each combustor 12 includes an outer wall (e.g., flow sleeve 80) disposed circumferentially 46 about an inner wall (e.g., combustor liner 82) to define an intermediate flow passage or space 84, while the combustor liner 82 extends circumferentially 46 about the combustion chamber 76. The inner wall 82 also may include a transition piece 88, which generally converges toward a first stage of the turbine 22. An impingement sleeve 86 is disposed circumferentially 46 about the transition piece 88. The liner 82 defines an inner surface of the combustor 12, directly facing and exposed to the combustion chamber 76. The flow sleeve 80 and/or impingement sleeve 86 may include a plurality of perforations 90, which direct an oxidant flow 92 (e.g., an airflow) from a compressor discharge 94 into the flow passage 84 while also impinging air against the liner 82 and/or the transition piece 88 for purposes of impingement cooling. The flow passage 84 then directs the oxidant flow 92 in an upstream direction toward the head end 72 (e.g., relative to a downstream direction 94 of the hot combustion gases), such that the oxidant flow 92 further cools the liner 82 before flowing through the head end chamber 74, through the fuel nozzles 16, and into the combustion chamber 76. It should be understood that this description is provided by way of example and should not be construed as limiting the invention to a combustor having any particular components or features, other than those specified in the claims.

FIG. 3 is a schematic of an embodiment of the gas turbine system 10 of FIG. 1, including the biasing system 50 configured to route different ratios and flow rates of a liquid fuel and water mixture to each combustor 12. As noted above, the biasing system 50 is configured to route different ratios and/or flow rates of a fuel mixture, such as a mixture of the water 21 and the liquid fuel 18 (e.g., the pilot fuel 20, the main fuel 19), to one or more combustors 12 or fuel nozzles 16.

In the illustrated embodiment, one or more mixing blocks 51 may be configured to mix the pilot fuel 20 and/or the main fuel 19 with the water 21 in a single mixing block 51. Further, each mixing block 51 may be configured to route the liquid fuel mixture 100 in one or more ratios and flow rates (e.g., 1, 2, 3, 4, 5, 6, 7, 8, 9, or 10 different ratios and/or flow rates) to the fuel nozzles 16 of one or more combustors 12 in a manner to reduce combustion dynamics (e.g., a non-uniform distribution of flow rates and/or ratios of fuel 18 and water 21). As noted above, the controller 58 may regulate the flow valves 60 to control and/or limit the flow of the pilot fuel 20, the main fuel 19, and/or the water 21 into each of the mixing blocks 51, and may control a ratio of the liquid fuel mixture 100 (e.g., water/fuel ratio) mixed via sensor feedback.

In certain embodiments, each combustor 12 may be associated with a particular mixing block 51, such that each combustor 12 receives a particular ratio of the liquid fuel mixture 100. In other embodiments, one or more combustors 12 and/or a group of combustors 12 may all be associated with a particular mixing block 51, thereby all receiving, for example, substantially the same ratio of the liquid fuel mixture 100 (e.g., ratio of water 21 relative to the main fuel 19 or ratio of water 21 relative to pilot fuel 20). Further, in certain embodiments, each fuel nozzle 16 may be associated with a particular mixing block 51, such that each fuel nozzle 16 receives a particular ratio of the liquid fuel mixture 100 (e.g., ratio of water 21 relative to fuel 18). In other embodiments, one or more fuel nozzles 16 and/or a group of fuel nozzles 16 (e.g., a circuit) may all be associated with a particular mixing block 51, such that each of the one or more fuel nozzles 16 receives a particular ratio of the liquid fuel mixture 100 (e.g., ratio of water 21 relative to fuel 18).

For example, in the illustrated embodiment, the first mixing block 102 may route a first liquid fuel mixture 106 with a first ratio of the liquid fuel 18 relative to water 21 to one or more fuel nozzles 16 of the first combustor 13. Further, the first mixing block 102 may route a second liquid fuel mixture 108 with a second ratio of the liquid fuel 18 relative to water 21 to one or more different fuel nozzles 16 of the first combustor 13. In this manner, the first mixing block 102 may be configured to vary the ratios of the liquid fuel mixture 100 routed to multiple fuel nozzles 16 of a single combustor 12, thereby helping to vary frequencies, reduce amplitudes, and/or reduce modal coupling of combustion dynamics.

In certain embodiments, rather than or in addition to varying the ratio of the liquid fuel mixture 100 to one or more combustors 12 and/or to one or more fuel nozzles 16 (e.g., a non-uniform distribution of water/fuel ratios), the flow rate of the liquid fuel mixture 100 may be varied between combustors 12 and/or between one or more fuel nozzles 16 (e.g., a non-uniform distribution of flow rates). For example, in the illustrated embodiment, the second mixing block 104 may be configured to provide the same ratio of the liquid fuel mixture 100 to all the fuel nozzles 16 of the second combustor 14. Further, the second mixing block 104 may include one or more flow control devices 56 (e.g., orifice plates) disposed along the fuel paths 23 that adjust or vary the flow rate of the liquid fuel mixture 100.

For example, a first orifice plate 110 may be configured to vary the flow rate of the liquid fuel mixture 100 routed to a set of fuel nozzles 16 from the flow rate of the liquid fuel mixture 100 routed through a second orifice plate 112 to a different set of fuel nozzles 16. Variations in the configurations and/or geometries between the first and second orifice plates 110 and 112 may result in the variations of the flow rate of the liquid fuel mixture 100, as described above with respect to FIG. 2. Accordingly, the biasing system 50 may utilize both the mixing systems 51 and the flow control devices 68 in various combinations and configurations to vary the flow rates and/or the composition of the liquid fuel mixture 100 routed to the one or more combustors 12 (e.g., in a non-uniform distribution), thereby helping to vary frequencies, reduce amplitudes, and/or reduce modal coupling of combustion dynamics.

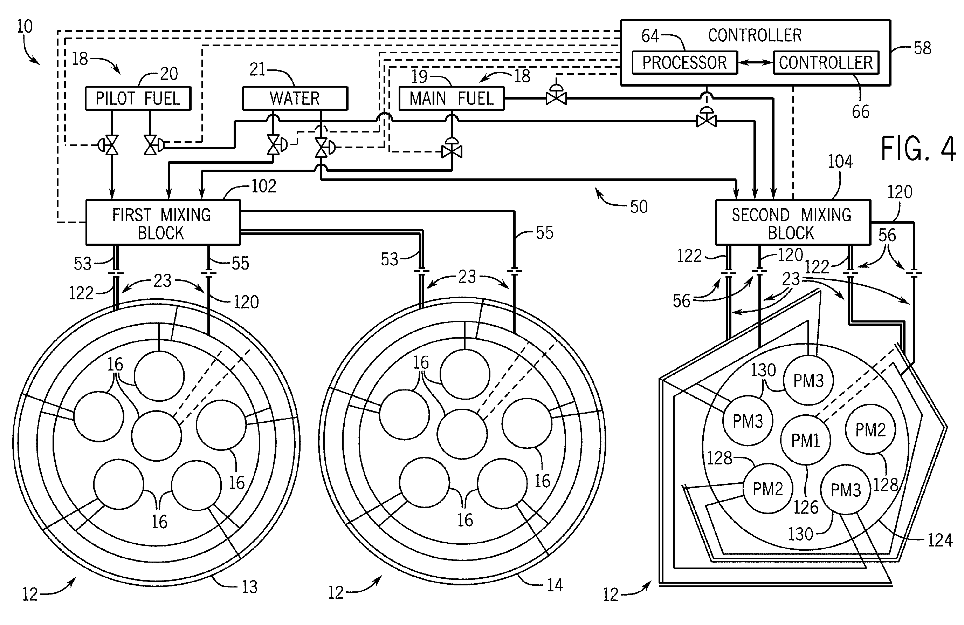

FIG. 4 is a schematic diagram of the gas turbine system 10 having the plurality of combustors 12 of FIG. 1, including one or more mixing systems 51 configured to route different flow rates and different ratios of the liquid fuel mixture 100 to one or more combustors 12. In the illustrated embodiment, the gas turbine system 10 includes three combustors 12. However, in other embodiments, the gas turbine system 10 includes any number of combustors 12 (e.g., 1, 2, 3, 4, 5, 6, 7, 8, 9, 10, 11, 12, 13, 14, 15, 16, or more combustors). Further, in the illustrated embodiment, the system 10 includes the biasing system 50 disposed along one or more fuel paths 23 upstream of the one or more combustors 12. Specifically, in the illustrated embodiment, each combustor 12 may include a main fuel path 120 configured to route the main fuel mixture 55 to the fuel nozzles 16 and a pilot fuel path 122 configured to route the pilot fuel mixture 53 to the fuel nozzles 16.

In the illustrated embodiments, the first mixing block 102 may be configured to provide the substantially same ratio (e.g., ratio of water 21 relative to fuel 18) of the main fuel mixture 55 and/or the pilot fuel mixture 53 to each of the first and the second combustors 13 and 14, while a second mixing block 104 is configured to a different ratio of the main fuel mixture 55 and/or the pilot fuel mixture 53 to the fuel nozzles 16 of a third combustor 124. In certain embodiments, the first mixing block 102 may be configured to vary the ratios (e.g., ratios of water 21 relative to fuel 18) of the main fuel mixture 55 and/or the pilot fuel mixture 53 between the fuel nozzles 16 of the first and second combustors 13 and 14 and/or within a single combustor 12.

In the illustrated embodiment, the third combustor 124 may include a first fuel circuit 126, a second fuel circuit 128, and a third fuel circuit 130. The first fuel circuit 126 may include the central fuel nozzle 16. The second fuel circuit 128 may include one or more of the outer fuel nozzles 16 arranged radially around the center fuel nozzle 16. Likewise, the third fuel circuit 130 may include one or more of the outer fuel nozzles 16 arranged radially around the center fuel nozzle 16. In some embodiments, the first circuit 126 supplying the center fuel nozzle 16 may be combined with the second fuel circuit 128. Each of the circuits is supplied with a water/main fuel mixture 55 from a main fuel path 120 and a water/pilot fuel mixture 53 from a pilot fuel path 122. In addition, each of the fuel nozzles 16 may have a circular cross-sectional shape, although other shapes, such as a truncated pie-shape, may be used in certain embodiments. In certain embodiments, the number, shape, and arrangements of the fuel nozzles 16 may be different from that shown in FIG. 4 and selected to achieve a desired combustion efficiency or performance.

In the illustrated embodiment, the second mixing block 104 may be configured to route substantially the same ratio (e.g., ratio of water 21 relative to fuel 18) of the main fuel mixture 55 and/or the pilot fuel mixture 53 to each of the fuel nozzles 16 of the third combustor 124. Further, in the illustrated embodiment, variations between one or more of the fuel circuits (e.g., the first fuel circuit 126, the second fuel circuit 128, and the third fuel circuit 130) may be achieved by varying the configuration and/or the geometries of the flow control devices 56 disposed along the main fuel path 120 and/or the pilot fuel path 122. It should be noted that in other embodiments, the second mixing block 104 may be configured to vary both the ratio and/or the flow rate of the main fuel mixture 55 and/or the pilot fuel mixture 53 between one or more of the fuel circuits (e.g., the first fuel circuit 126, the second fuel circuit 128, and the third fuel circuit 130).

Technical effects of the invention include reducing combustion dynamic amplitudes in combustors 12, reducing combustion dynamics amplitudes and/or modal coupling of combustion dynamics within a particular combustor 12 or between multiple combustors 12, and reducing potential unwanted vibratory responses in the gas turbine system 10 (e.g., due to frequencies matching natural frequencies of components). In particular, this may be accomplished via one or more biasing systems 50 disposed upstream of one or more fuel nozzles 16 of the system 10. The biasing system 50 may include one or more mixing systems 51 and one or more flow control devices 56. The mixing systems 51 may vary the composition (e.g., ratio of the liquid fuel 18 relative to the water 21) of the fuel mixture provided to one or more combustors 12 and/or provided to one or more fuel nozzles 16 within a particular combustor 12. The one or more flow control devices 56 (e.g., orifice plates 68) may vary the quantity (e.g., flow rate) of the fuel mixture provided to one or more combustors 12 and/or provided to one or more fuel nozzles 16 within a particular combustor 12. The orifice plates 68 may vary in number, arrangement, diameter, shapes, total effective orifice areas, or any combination thereof. The geometric arrangement, shape, and/or characteristic of orifice plates 68 may be configured and varied within and/or between combustors 12, thereby reducing amplitudes, modal coupling of the combustors, and therefore, any undesirable vibratory responses in downstream components. Further, the controller 58 may be configured to dynamically control the ratios of the fuel mixture provided to the fuel nozzles 16 and/or the combustors 12 of the system 10 with one or more controls signals configured to open or close one or more flow valves 60.

This written description uses examples to disclose the invention, and also to enable any person skilled in the art to practice the invention, including making and using any devices or systems and performing any incorporated methods. The patentable scope of the invention is defined by the claims, and may include other examples that occur to those skilled in the art. Such other examples are intended to fall within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a gas turbine engine comprising:
      a first combustor comprising a first fuel nozzle disposed in a first head end chamber of the first combustor, wherein the first fuel nozzle is configured to inject a first fuel mixture and an oxidant into a first combustion chamber of the first combustor, the first fuel mixture comprising a first ratio of liquid fuel and water;
      a second combustor comprising a second fuel nozzle disposed in a second head end chamber of the second combustor, wherein the second fuel nozzle is configured to inject a second fuel mixture into a second combustion chamber of the second combustor, the second fuel mixture comprising a second ratio of the liquid fuel and the water; and
      a biasing system disposed along a fuel path upstream of the first and the second fuel nozzles, wherein the biasing system is configured to help reduce a combustion dynamics amplitude or modal coupling between the first combustor and the second combustor.
2. The system of clause 1, wherein the biasing system comprises a first orifice plate along the fuel path configured to regulate a first fuel flow rate of the first fuel mixture.
3. The system of any preceding clause, wherein the biasing system comprises a second orifice plate along the fuel path configured to regulate a second fuel flow rate of the second fuel mixture, and wherein the first fuel flow rate is different from the second fuel flow rate.
4. The system of any preceding clause, wherein the first orifice plate has at least one difference relative to the second orifice plate; and wherein the at least one difference comprises at least one of different orifice diameters, different orifice shapes, different numbers of orifices, different geometrical arrangements of orifices, different distances between adjacent orifices, different valve types, different valve shapes, different number of valves, different valve sizes, or any combination thereof.
5. The system of any preceding clause, wherein the biasing system comprises, along the fuel path, a first mixing system configured to control the first ratio of the liquid fuel to the water of the first fuel mixture, and wherein the first fuel nozzle is a primary fuel nozzle having a main fuel portion through which the first fuel mixture and oxidant are injected.
6. The system of any preceding clause, wherein the biasing system comprises, along the fuel path, a second mixing system configured to control the second ratio of the liquid fuel to the water of the second fuel mixture, wherein the first ratio is different from the second ratio, and wherein the second fuel nozzle is a primary fuel nozzle having a main fuel portion through which the second fuel mixture and oxidant are injected.
7. The system of any preceding clause, wherein the second mixing system is configured to cause the first ratio to be different from the second ratio.
8. The system of any preceding clause, wherein the biasing system comprises, along the fuel path, a first mixing system configured to control a third ratio of the liquid fuel to the water of the first fuel mixture, and wherein the first fuel nozzle is a primary fuel nozzle having a pilot fuel portion through which the third fuel mixture and oxidant are injected.
9. The system of any preceding clause, wherein the biasing system comprises, along the fuel path, a second mixing system configured to control a fourth ratio of the liquid fuel to the water of the second fuel mixture, wherein the third ratio is different from the fourth ratio, and wherein the second fuel nozzle is a primary fuel nozzle having a pilot fuel portion through which the fourth fuel mixture and oxidant are injected.
10. The system of any preceding clause, wherein the biasing system comprises, along the fuel path, a first mixing system configured to control a first ratio of the liquid fuel to the water of the first fuel mixture and a second ratio of the liquid fuel to the water of the second fuel mixture, wherein the liquid fuel is a main fuel, and wherein the first fuel nozzle and the second fuel nozzle are primary fuel nozzles having a main fuel portion through which respective portions the first fuel mixture and the second fuel mixture are injected with an oxidant.
11. The system of any preceding clause, wherein the biasing system comprises, along the fuel path, a second mixing system configured to control a third ratio of the liquid fuel to the water of a third fuel mixture and a fourth ratio of the liquid fuel to the water of a fourth fuel mixture, wherein the liquid fuel is a pilot fuel; wherein the first and second fuel nozzles are primary fuel nozzles having a pilot fuel portion through which respective portions the third fuel mixture and the fourth fuel mixture are injected with an oxidant.
12. The system of any preceding clause, wherein the first mixing system and the second mixing system are configured to cause at least one of the first ratio being different from the second ratio and the third ratio being different from the fourth ratio.
13. The system of any preceding clause, comprising:
   a first plurality of first combustors; and
   a second plurality of second combustors, wherein the first and second combustors are arranged in a pattern to help reduce the combustion dynamics amplitude or modal coupling between the first plurality of first combustors and the second plurality of second combustors.
14. A system, comprising:
   a gas turbine engine comprising:
      a combustor comprising a first fuel nozzle and a second fuel nozzle disposed in a head end chamber of the combustor, wherein the fuel nozzles are primary fuel nozzles having a main fuel portion and a primary fuel portion, the fuel nozzles being configured to inject a fuel mixture and an oxidant into a combustion chamber of the combustor, the fuel mixture comprising a liquid fuel and water; and
      a biasing system disposed in a fuel path upstream of the combustor, wherein the biasing system is configured to at least partially control a combustion dynamics amplitude in the combustor.
15. The system of any preceding clause, wherein the biasing system comprises at least one orifice plate disposed along the fuel path, the biasing system being configured to at least partially control a flow rate of the fuel mixture along the fuel path to at least the first fuel nozzle, such that the flow rate of the fuel mixture to the first fuel nozzle is different from a flow rate of the fuel mixture to the second fuel nozzle.
16. The system of any preceding clause, wherein the fuel mixture and oxidant are injected through the main fuel portion of the first fuel nozzle and the second fuel nozzle.
17. The system of any preceding clause, wherein the fuel mixture and oxidant are injected through the pilot fuel portion of the first fuel nozzle and the second fuel nozzle.
18. The system of any preceding clause, wherein the biasing system comprises a mixing system configured to control a ratio of the liquid fuel to the water of the fuel mixture to at least the first fuel nozzle, such that the ratio of the fuel mixture to the first fuel nozzle is different from the ratio of the fuel mixture to the second fuel nozzle.
19. A method, comprising:
   injecting a first fuel mixture and an oxidant into a first combustion chamber of a first combustor using a first fuel nozzle disposed in a first head end chamber of the first combustor, the first fuel mixture comprising a first ratio of liquid fuel and water and the first fuel nozzle comprising a primary fuel nozzle having a main fuel portion through which the first fuel mixture and oxidant are injected;
   injecting a second fuel mixture and the oxidant into a second combustion chamber of a second combustor using a second fuel nozzle disposed in a second head end chamber of the second combustor, the second fuel mixture comprising a second ratio of the liquid fuel and the water and the second fuel nozzle comprising a primary fuel nozzle having a main fuel portion through which the second fuel mixture and oxidant are injected; and
   controlling a first combustion dynamics amplitude in the first combustor with a biasing system disposed in the fuel path upstream of the first fuel nozzle and the second fuel nozzle, wherein the biasing system is configured to help reduce combustion dynamics amplitudes or modal coupling between the first combustor and the second combustor.
20. The method of any preceding clause, wherein controlling the first and the second combustion dynamics amplitudes comprises varying the first ratio of the first fuel mixture to be different from the second ratio of the second fuel mixture.
21. The method of any preceding clause, wherein controlling the first and the second combustion dynamics amplitudes comprises varying a first flow rate of the first fuel mixture to be different from a second flow rate of the second fuel mixture.

## Claims

1. A system, comprising:
a gas turbine engine comprising:
a first combustor comprising a first fuel nozzle disposed in a first head end chamber of the first combustor, wherein the first fuel nozzle is configured to inject a first fuel mixture and an oxidant into a first combustion chamber of the first combustor, the first fuel mixture comprising a first ratio of liquid fuel and water;
a second combustor comprising a second fuel nozzle disposed in a second head end chamber of the second combustor, wherein the second fuel nozzle is configured to inject a second fuel mixture into a second combustion chamber of the second combustor, the second fuel mixture comprising a second ratio of the liquid fuel and the water; and
a biasing system disposed along a fuel path upstream of the first and the second fuel nozzles, wherein the biasing system is configured to help reduce a combustion dynamics amplitude or modal coupling between the first combustor and the second combustor.

2. The system of claim 1, wherein the biasing system comprises a first orifice plate along the fuel path configured to regulate a first fuel flow rate of the first fuel mixture.

3. The system of claim 2, wherein the biasing system comprises a second orifice plate along the fuel path configured to regulate a second fuel flow rate of the second fuel mixture, and wherein the first fuel flow rate is different from the second fuel flow rate.

4. The system of claim 1, 2 or 3, wherein the biasing system comprises, along the fuel path, a first mixing system configured to control the first ratio of the liquid fuel to the water of the first fuel mixture, and wherein the first fuel nozzle is a primary fuel nozzle having a main fuel portion through which the first fuel mixture and oxidant are injected.

5. The system of claim 4, wherein the biasing system comprises, along the fuel path, a second mixing system configured to control the second ratio of the liquid fuel to the water of the second fuel mixture, wherein the first ratio is different from the second ratio, and wherein the second fuel nozzle is a primary fuel nozzle having a main fuel portion through which the second fuel mixture and oxidant are injected.

6. The system of any preceding claim, wherein the biasing system comprises, along the fuel path, a first mixing system configured to control a third ratio of the liquid fuel to the water of the first fuel mixture, and wherein the first fuel nozzle is a primary fuel nozzle having a pilot fuel portion through which the third fuel mixture and oxidant are injected.

7. The system of claim 6, wherein the biasing system comprises, along the fuel path, a second mixing system configured to control a fourth ratio of the liquid fuel to the water of the second fuel mixture, wherein the third ratio is different from the fourth ratio, and wherein the second fuel nozzle is a primary fuel nozzle having a pilot fuel portion through which the fourth fuel mixture and oxidant are injected.

8. The system of any preceding claim, wherein the biasing system comprises, along the fuel path, a first mixing system configured to control a first ratio of the liquid fuel to the water of the first fuel mixture and a second ratio of the liquid fuel to the water of the second fuel mixture, wherein the liquid fuel is a main fuel, and wherein the first fuel nozzle and the second fuel nozzle are primary fuel nozzles having a main fuel portion through which respective portions the first fuel mixture and the second fuel mixture are injected with an oxidant.

9. The system of claim 8, wherein the biasing system comprises, along the fuel path, a second mixing system configured to control a third ratio of the liquid fuel to the water of a third fuel mixture and a fourth ratio of the liquid fuel to the water of a fourth fuel mixture, wherein the liquid fuel is a pilot fuel; wherein the first and second fuel nozzles are primary fuel nozzles having a pilot fuel portion through which respective portions the third fuel mixture and the fourth fuel mixture are injected with an oxidant.

10. A system, comprising:
a gas turbine engine comprising:
a combustor comprising a first fuel nozzle and a second fuel nozzle disposed in a head end chamber of the combustor, wherein the fuel nozzles are primary fuel nozzles having a main fuel portion and a primary fuel portion, the fuel nozzles being configured to inject a fuel mixture and an oxidant into a combustion chamber of the combustor, the fuel mixture comprising a liquid fuel and water; and
a biasing system disposed in a fuel path upstream of the combustor, wherein the biasing system is configured to at least partially control a combustion dynamics amplitude in the combustor.

11. The system of claim 10, wherein the biasing system comprises at least one orifice plate disposed along the fuel path, the biasing system being configured to at least partially control a flow rate of the fuel mixture along the fuel path to at least the first fuel nozzle, such that the flow rate of the fuel mixture to the first fuel nozzle is different from a flow rate of the fuel mixture to the second fuel nozzle.

12. The system of claim 10, wherein the biasing system comprises a mixing system configured to control a ratio of the liquid fuel to the water of the fuel mixture to at least the first fuel nozzle, such that the ratio of the fuel mixture to the first fuel nozzle is different from the ratio of the fuel mixture to the second fuel nozzle.

13. A method, comprising:
injecting a first fuel mixture and an oxidant into a first combustion chamber of a first combustor using a first fuel nozzle disposed in a first head end chamber of the first combustor, the first fuel mixture comprising a first ratio of liquid fuel and water and the first fuel nozzle comprising a primary fuel nozzle having a main fuel portion through which the first fuel mixture and oxidant are injected;
injecting a second fuel mixture and the oxidant into a second combustion chamber of a second combustor using a second fuel nozzle disposed in a second head end chamber of the second combustor, the second fuel mixture comprising a second ratio of the liquid fuel and the water and the second fuel nozzle comprising a primary fuel nozzle having a main fuel portion through which the second fuel mixture and oxidant are injected; and
controlling a first combustion dynamics amplitude in the first combustor with a biasing system disposed in the fuel path upstream of the first fuel nozzle and the second fuel nozzle, wherein the biasing system is configured to help reduce combustion dynamics amplitudes or modal coupling between the first combustor and the second combustor.

14. The method of claim 13, wherein controlling the first and the second combustion dynamics amplitudes comprises varying the first ratio of the first fuel mixture to be different from the second ratio of the second fuel mixture.

15. The method of claim 13, wherein controlling the first and the second combustion dynamics amplitudes comprises varying a first flow rate of the first fuel mixture to be different from a second flow rate of the second fuel mixture.
